(19) Europäisches Patentamt
European Patent Office
Office européen des brevets

(11) Veröffentlichungsnummer: **0 000 746**
**B1**

(12) # EUROPÄISCHE PATENTSCHRIFT

(21) Anmeldenummer: **78100532.7**

(22) Anmeldetag: **28.07.78**

(51) Int. Cl.³: **C 07 F 7/22**, C 08 K 5/57, C 08 L 27/06

(54) **Neue Organozinnverbindungen, ihre Herstellung und ihre Verwendung.**

(30) Priorität: **09.08.77 DE 2735810**

(43) Veröffentlichungstag der Anmeldung:
**21.02.79 Patentblatt 79/4**

(45) Bekanntmachung des Hinweises auf die Patenterteilung:
**28.01.81 Patentblatt 81/4**

(84) Benannte Vertragsstaaten:
**BE CH DE FR GB NL**

(56) Entgegenhaltungen:
**FR - A - 2 285 392**
**FR - A - 2 306 208**

(73) Patentinhaber: **HOECHST AKTIENGESELLSCHAFT**
**Postfach 80 03 20**
**D-6230 Frankfurt/Main 80 (DE)**

(72) Erfinder: **Korbanka, Helmut, Dr.**
**Birkenstrasse 24**
**D-8901 Adelsried (DE)**

(72) Erfinder: **Scheidl, Franz, Dr.**
**Hans-Fischer-Strasse 4**
**D-8906 Gersthofen (DE)**

**EP 0 000 746 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Neue Organozinnverbindungen ihre Herstellung und ihre Verwendung

Die Erfindung betrifft neue Organozinnverbindungen, ein Verfahren zu ihrer Herstellung und ihre Verwendung als Stabilisatoren für halogenhaltige Polymere.

Bei der Verarbeitung halogenhaltiger Polymerer, insbesondere Polymerer und Copolymerer des Vinylchlorids und Vinyldenchlorids müssen diesen Wärmestabilisatoren zugesetzt werden, um Zersetzungen, die zu Verfärbungen, zu Versprödungen und zur Verschlechterung der mechanischen Eigenschaften führen, zu verhindern oder weitgehend zu verzögern.

Als Wärmestabilisatoren werden im allgemeinen Bleisalze von organischen und/oder anorganischen Säuren, Barium-, Cadmium-, Calcium-, Strontium-, Zink- und andere Metallsalze organischer Säuren oder anderer H-acider Verbindungen, wie z.B. Phenole und saure Ester, sowie Organozinnverbindungen verwendet. Zu den wirksamsten Wärmestabilisatoren zählen Organozinnverbindungen wie Organozinnmercaptide, -thioglykolate und -carboxylate.

Es wurde gefunden, daß sich Gemischebisher nicht bekannter Organozinnverbindungen der allgemeinen Formeln

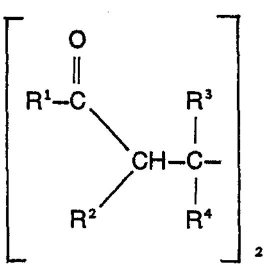 $Sn(R^5)_2$ und 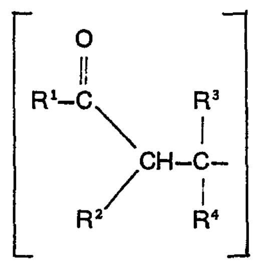 $Sn(R^5)_3$

I II

wobei die verwendeten Symbole die nachstehende Bedeutung haben, hervorragend als Wärmestabilisatoren für halogenhaltige Polymere eignen.

In den Formel bedeutet:

$R^1$ OH, $—NH_2$, einen Alkylaminorest, einen Arylaminorest, einen O-Alkylrest oder einen O-Arylrest, wobei die beiden letztgenannten Reste auch aryl- bzw. alkylsubstituiert sein können und sowohl als solche als auch in der aryl- bzw. alkylsubstituierten Form als Substituenten gegebenenfalls noch Halogen oder eine Hydroxyl-, Thioäther-, Äther- und/oder Carboxylgruppe tragen,

$R^2$ bis $R^4$ gleiche oder verschiedene Substituenten, und zwar

a) O bis zwei Wasserstoffatome sowie

b) Alkylreste mit ein bis 30 C-Atomen sind mit der Bedingung, daß mindestens einer dieser Reste eine Gruppe

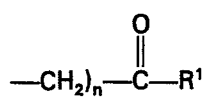

ist, wobei $R^1$ die oben angegebene Bedeutung hat und n für eine Zahl von 1 bis 15 steht,

$R^5$ $—S—(CH_2)_m—CO_2$-Alkyl, —S-Alkyl-, $—O_2C$-Alkyl und $—O_2C—CH{=}CH—CO_2$-Alkyl, wobei m die Zahl 1 oder 2 ist und der Alkylrest gegebenenfalls noch —O—, —S— oder $—CO_2$-Gruppen und OH-Substituenten enthalten kann.

Die sich in den beiden Gemischkomponenten I und II entsprechenden Reste $R^1$ bis $R^5$ sind stets gleich.

Beispiele für $R^1$ sind OH, $NH_2$, Alkyl- und Arylaminorest wie

$—NH(CH_3)$, 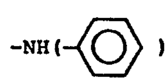, $—N(C_2H_5)_2$, 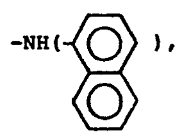,

O-Alkylreste wie $—OCH_3$, $—OC_2H_5$, $—OC_8H_{17}$, 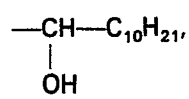, $—O—CH_2—CH_2—O—C_4H_9$,

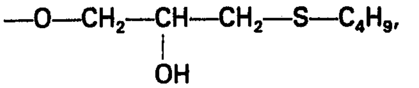 O—$CH_2$—$CH_2$—$O_2C$—$C_8H_{17}$, 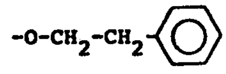 ,

und O-Arylreste wie 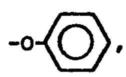 , 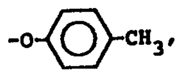 , 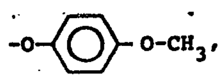 , 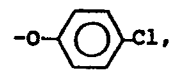

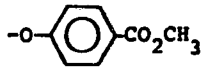

Beispiele für $R^2$ bis $R^4$ sind mindestens ein Rest:

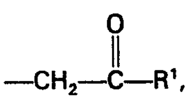 , 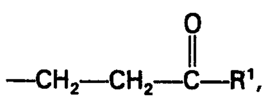 , 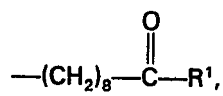 , 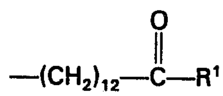

mit $R^1$ wie vorstehend genannt, daneben: H, Methyl, Äthyl, Propyl, Hexyl, Dodecyl, Octadecyl usf.

Beispiele für $R^5$ sind an sich bekannte, in der Zinnstabilisatoren-Chemie stets verwendete Reste. Genannt seien z.B. aus der Mercaptid-Reihe —S—$C_8H_{17}$, —S—$C_{12}H_{25}$, —S—$C_{18}H_{25}$, aus der Alkylthiocarboxylat-Reihe z.B.

—S—$(CH_2)_n$—$CO_2$-Alkyl ($n = 1$ und 2; Alkyl = Octyl, Lauryl, Octadecyl, 2-Hydroxy-octadecyl usf.), aus der Carboxylatreihe z.B.

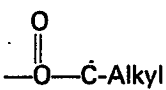 (Alkyl = Heptyl, Undecyl, Heptadecyl usf.) und aus der Partialesterreihe z.B.

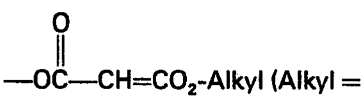 (Alkyl = Methyl, Butyl, Octyl, Dodecyl usf.)

Weitere bekannte Beispiele für Reste $R^5$ sind in den DT—OSS 1 418 001, 1 418 017, 1 418 019, 1 494 332, 1 544 729, 1 569 070, 1 569 136, 1 569 170, 1 694 936, 1 801 274 und 2 006 711, der GB—PS 1 439 752 sowie der US—PS 3 925 309 beschrieben.

Die neuen Organozinnverbindungen werden nach aus der Organo-Zinnchemie bekannten Verfahren erhalten. Man geht von Organozinnhalogenidgemischen der Formeln

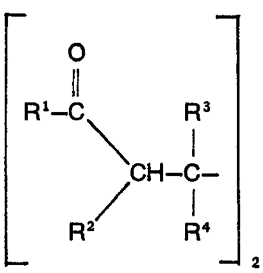 $SnHal_2$ und 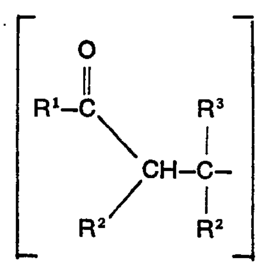 $SnHal_3$

aus — die Bedeutung der Symbole $R^1$ bis $R^4$ ist oben angegeben; Hal ist Cl, Br, J — die nach den Angaben der deutschen Patentanmeldung P 27 357 57 durch Umsetzen von bestimmten, substituierten Olefinen mit metallischem Zinn und Chlorwasserstoff zugänglich sind und setzt diese bei Temperaturen zwischen etwa 0 und 150, vorzugsweise 15 bis 80°C mit Mercaptanen, Thiocarbonsäuren, Carbonsäuren und Partialestern wie Maleinsäuremonoestern in Gegenwart von Halogenwasserstoffakzeptoren wie NaOH, $NaHCO_3$, $KHCO_3$ oder Aminen, wie Triäthylamin, Pyridin usf. und gegebenenfalls in inerten Lösungsmitteln, wie Äthern, Ketonen, Estern, aliphatischen oder aromatischen Kohlenwasserstoffen um. Eine weitere Möglichkeit besteht darin, daß man die Organozinnhalogenide zu Organozinnoxiden hydrolysiert und letztere mit den —SH— oder —$CO_2H$-Verbindungen unter Abspaltung von Wasser zur Reaktion bringt.

Bevorzugt eingesetzte Organozinnhalogenide sind solche gemäß vorstehender Formel, bei denen

$R^1$ O-Alkyl mit 1 bis 30, vorzugsweise 1 bis 20 und insbesondere 1 bis 10 Kohlenstoffatomen, $R^3$ und $R^4$ Wasserstoff und

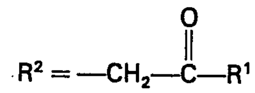

mit den für $R^1$ angegebenen, bevorzugten Bedeutungen ist. Bevorzugte Reaktionskomponenten, die in den Verfahrensprodukten den Rest $R^5$ darstellen, sind Ester der Thioglykolsäure, Ester der Thiopropionsäure, Alkylmercaptane mit bevorzugt 8 bis 18 C-Atomen wie Octyl-, Dodecyl- oder Stearylmercaptan, Fettsäuren mit 8 bis 34 C-Atomen, beispielsweise Laurinsäure, 2-Äthylhexansäure, Stearinsäure, Montansäure sowie Maleinsäuremonoester.

Da die eingesetzten Organozinnhalogenide Gemische aus Tri- und Dihalogenidendarstellen (Verhältnis Organozinndichlorid/Organozinntrichlorid je nach Herstellverfahren zwischen 1 : 0,01 bis 1 : 4), sind die Organozinnverbindungen gemäß der Erfindung ebenfalls Gemische, was für den beanspruchten Verwendungszweck jedoch nicht von Nachteil ist, denn aus der Organozinnstabilisatoren-Praxis ist bekannt, daß Gemische aus Diaalkyl- und Monoalkylzinnstabilisatoren in chlorhaltigen Polymeren wie Polyvinylchlorid einen synergistischen stabilisierenden Effekt aufweisen. Falls gewünscht, kann man selbstverständlich auch die reinen Di- und Monoorganozinnstabilisatoren der allgemeinen Formeln I und II herstellen, muß jedoch dann von reinen Di- bzw. Trihalogeniden, die aus den Mischungen nach bekannten Methoden (z.B. fraktionierte Kristallisation) isolierbar sind, ausgehen.

Einige typische Vertreter der erfindungsgemäßen Organozinn-Verbindungen seien im folgenden aufgezählt; die Erfindung soll jedoch nicht auf die genannten Substanzen beschränkt werden.

Gemische aus Di- und Mono-(bis-2,3-carbomethoxy-)-propyl-zinn-di- und -trioctylthioglykolat

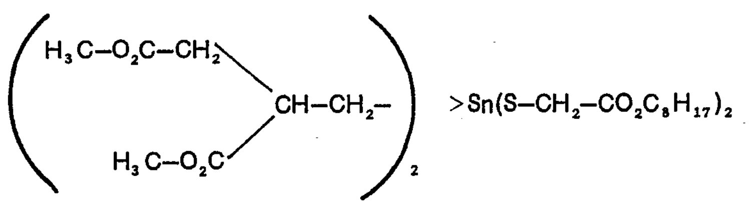 und

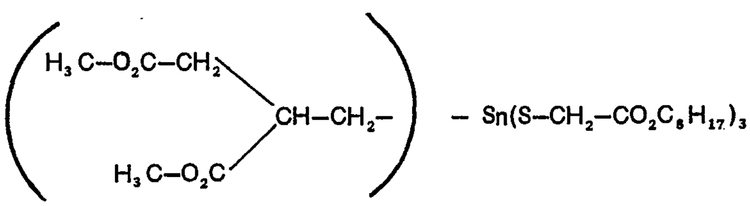

Gemisch aus Di- und Mono-(bis-2,4-carbobutoxy-)butyl-zinn-di- und tri-n-dodecylmercaptid

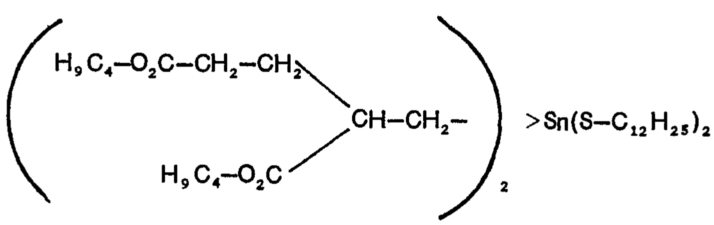 und

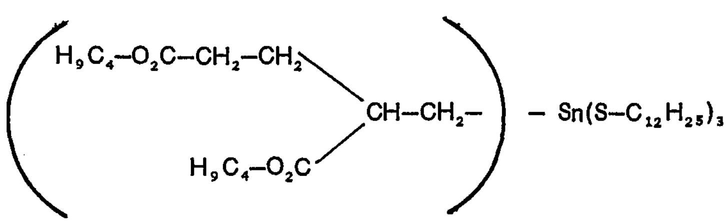

Gemisch aus Di- und Mono-(bis-2,3-carbophenoxy-)propyl-zinn-di- und -trilaurat

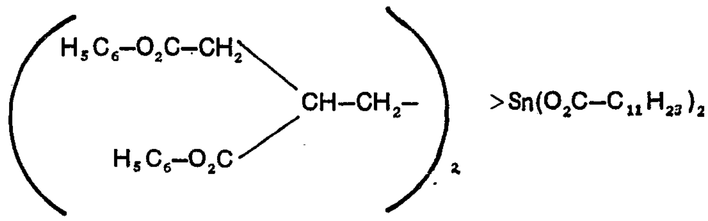

und

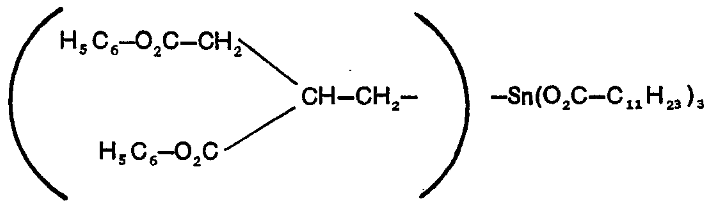

Gemisch aus Di- und Mono - (bis - 2,3 - carbo - 2 - hydroxy - tetradecoxy-)propyl - zinn - di- und -trimonobutylmaleinat

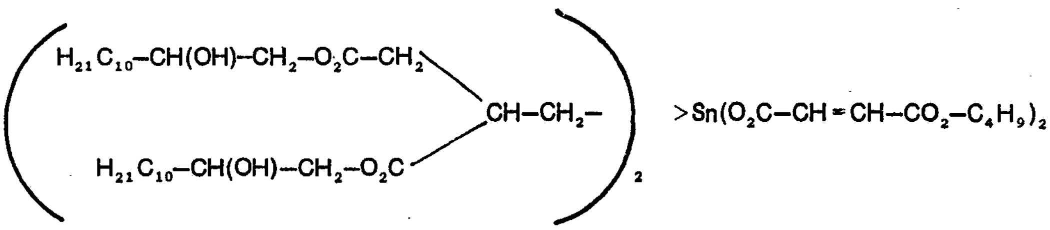

und

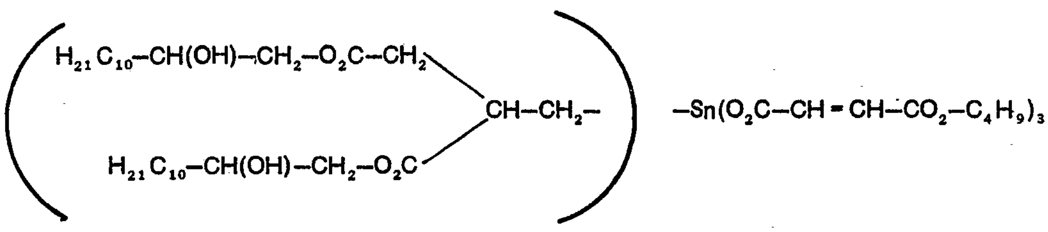

Gemisch aus Di- und Mono-(bis-2,3-anilino-carbonyl-)propyl-zinn-di- und -tributylthiopropionat

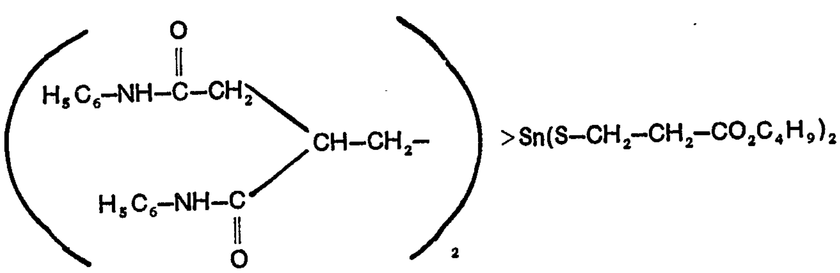

und

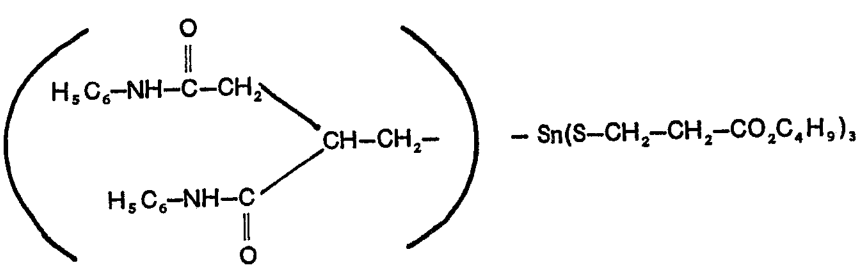

Die erfindungsgemäßen Organozinnstabilisatoren zeigen in halogenhaltigen Polymerisaten, beispeilsweise Chlorpolyäthylen, Hart- und Weich-Polyvinylchlorid, Polyvinylidenchlorid, Polyvinylchloracetat und Vinylchlorid-$\alpha$-Olefin-Copolymerisaten eine sehr gute stabilisierende Wirkung, die der von bekannten Verbindungen, beispielsweise von Dibutylzinnstabilisatoren entspricht. Darüber hinaus wird beobachtet, daß mit den neuen Verbindungen stabilisierte thermoplastische Massen eine verbesserte Transparenz aufweisen.

Die neuen Stabilisatoren werden im allgemeinen zusammen mit anderen bekannten Stabilisatoren, wie Calcium-stearat oder anderen stabilisierenden Metallsalzen, stabilisierenden Hilfsmitteln (Epoxide, Organophosphite), Antioxidanten wie Phenole, UV-stabilisierenden Verbindungen, Gleitmitteln, Weichmachern, Pigmenten, Füll- und Hilfsstoffen u.ä. verwendet. Man setzt sie in Mengen von 0,1 bis 10, vorzugsweise 0,2 bis 5 und insbesondere 0,5 bis 3 Gewichtsteilen, bezogen auf 100 Gewichtsteile Polymeres, ein.

Die folgenden Beispiele sollen die Erfindung weiter erläutern. Die Beispiele 1 bis 10 beschrieben die Herstellung der neuen Organozinnverbindungen, die Beispiele 11 bis 32 zeigen die Polyvinylchloridstabilisierende Wirkung im Vergleich zu bekannten Organozinnverbindungen.

Beispiel 1

In einem mit Rühreinrichtung, Innenthermometer und Tropftrichter ausgestatteten 500-ml-Dreihalskolben wurden 40,8 g (0,2 Mol) Thioglykolsäure-2-äthyl-hexylester, 36,0 g (0,2 Äquivalent Chlor) eines Gemisches aus ca. 59 Gew.-% Di-(bis-2,3-carbomethoxy-)propyl-zinndichlorid und ca. 41 Gew.-% Mono-(bis-2,3-carbomethoxy-)propyl-zinntrichlorid (Chlorgehalt des Gemisches: 19,7%, Zinngehalt: 21,8%) und 300 ml Toluol vorgelegt. Bei 20°C wurde eine Lösung von 20,2 g (0,2 Mol) Triäthylamin in 50 ml Toluol zugetropft. Sodann wurde 2 Stunden bei Raumtemperatur weitergerührt. Anschließend wurde der entstandene Niederschlag (27,5 g Triäthylammoniumchlorid) abgesaugt. Aus dem Filtrat wurde nach Abdestillieren des Toluols der Organozinnstabilisator in Form einer gelblichen Flüssigkeit als Rückstand isoliert.

Ausbeute: 69,5 g Organozinn-2-äthylhexylthioglykolat;

Analyse: 11,3% Sn
0,1% Cl

Beispiele 2 bis 10

Nach der im Beispiel 1 beschriebenen Verfahrensweise wurde unter Einsatz der in der nachstehenden Tabelle 1 zusammengestellten Reaktionspartner eine Anzahl weiterer Organozinnstabilisatoren hergestellt. Es wurden stets 0,2 Äquivalent des Organozinnhalogenids, 0,2 Mol der Reaktionskomponente, 0,2 Mol Triäthylamin als Chlorwasserstoff-Akzeptor und als Lösungsmittel insgesamt 350 ml Toluol eingesetzt. In allen Fällen wurden ca. 27,5 g Triäthylamin-Hydrochlorid als Niederschlag isoliert. Die erhaltenen Organozinnverbindungen enthielten wie in Beispiel 1 praktisch kein Chlor. In Tabelle 2 sind die Ergebnisse im einzelnen aufgeführt, Tabelle 1 nennt die Ausgangsmaterialien und ihre Einsatzmengen.

TABELLE 1

| Beisp. Nr. | Ausgangsprodukte | | | | | |
|---|---|---|---|---|---|---|
| | Organozinnhalogenid | | | | | Reaktions-komponente |
| | Gemisch aus % $(R)_2SnCl_2$ | % $(R)SnCl_3$ | Struktur von R | % Cl / % Sn | Menge (g) | |
| 2 | 72 | 28 | 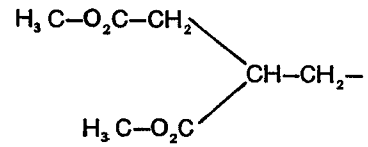 | 17,8 / 23,0 | 39,9 | 1) |
| 3 | 87 | 13 | 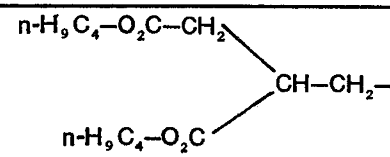 | 13,7 / 16,8 | 51,8 | 2) |
| 4 | 75 | 25 | 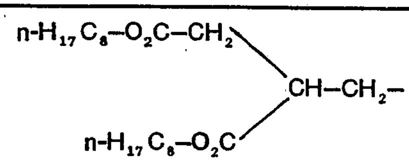 | 10,4 / 12,7 | 68,3 | 3) |
| 5 | 50 | 50 | 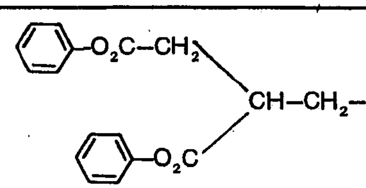 | 15,2 / 19,5 | 46,8 | 1) |
| 6 | 68 | 32 | 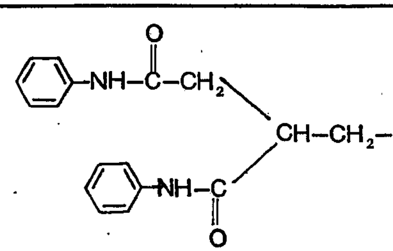 | 12,5 / 14,1 | 56,8 | 4) |

TABELLE 1 (Fortsetzung)

| Beisp. Nr. | Ausgangsprodukte | | | | | |
|---|---|---|---|---|---|---|
| | Organozinnhalogenid | | | | | Reaktions-komponente |
| | Gemisch aus % $(R)_2SnCl_2$ | % $(R)SnCl_3$ | Struktur von R | % Cl / % Sn | Menge (g) | |
| 7 | 73 | 7 | 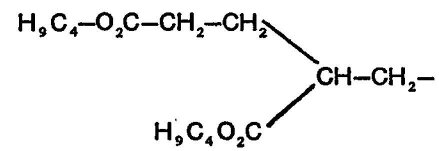 | 12,5 / 16,3 | 56,8 | 5) |
| 8 | 60 | 40 | 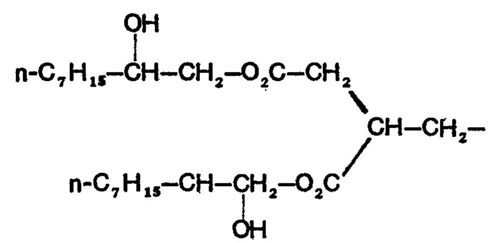 | 10,8 / 14,3 | 65,7 | 5) |
| 9 | 55 | 45 | 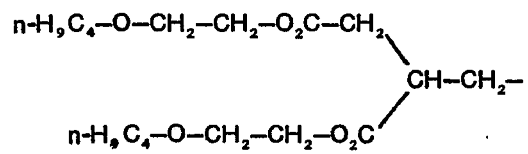 | 13,1 / 17,2 | 54,3 | 1) |
| 10 | 67 | 33 | 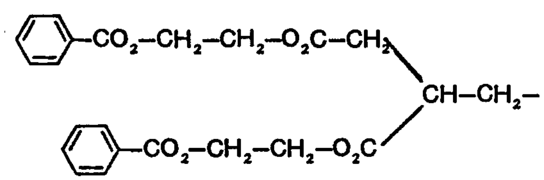 | 11,0 / 13,7 | 64,5 | 1) |

1) Thioglykolsäure-2-äthylhexylester.
2) 3-Thiopropionsäure-2-äthylhexylester.
3) n-Dodecylmercaptan.
4) Laurinsäure.
5) Maleinsäure-mono-n-butylester.

TABELLE 2

| Beispiel Nr. | erhaltener Organozinnstabilisator | | |
|---|---|---|---|
| | Ausbeute (g) | Zinngehalt (%) | zu bezeichnen als Organozinn..... |
| 2 | 73,2 | 10,5 | -2-äthylhexylthioglykolat |
| 3 | 88,1 | 9,8 | -2-äthylhexylthiopropionat |
| 4 | 101,1 | 8,6 | -n-dodecylmercaptid |
| 5 | 80,1 | 11,4 | -2-äthylhexylthioglykolat |
| 6 | 89,7 | 8,9 | -laurat |
| 7 | 83,5 | 11,0 | -mono-n-butylmaleinat |
| 8 | 92,8 | 10,0 | -mono-n-butylmaleinat |
| 9 | 87,7 | 10,6 | -2-äthylhexylthioglykolat |
| 10 | 98,1 | 9,0 | -2-äthylhexylthioglykolat |

Beispiele 11 bis 32

Diese Beispiele zeigen die stabilisierende Wirkung der neuen Organozinnstabilisatoren bei der Verarbeitung von PVC. Die angegebenen Teile sind stets Gewichtsteile.

Jeweils 100 Teile eines Suspensions-Polyvinylchlorids vom K-Wert 68 wurden mit 0,4 Teilen Calciumstearat, 0,4 Teilen Kohlenwasserstoffwachs vom Tropfpunkt ca. 90°C und dem zu prüfenden Organozinnstabilisator in einer solchen Menge, daß stets in etwa der gleiche Zinngehalt im Ansatz vorhanden war, vermischt. Zu Vergleichszwecken wurden bekannte Zinnstabilisatoren in die Prüfungen einbezogen.

Zur Bestimmung der dynamischen Wärmestabilität werden die Mischungen auf ein 180°C beheiztes Labor-Zweiwalzwerk aufgetragen und bei einer Tourenzahl von 20 UpM innerhalb von einer Minute zu einem Fell verwalzt. Von diesem werden in Abständen von 5 Minuten Proben entnommen, deren Farben mit denen einer internen Farbskala verglichen werden. Die einzelnen Versuche laufen jeweils so lange, bis das Walzfell eine dunkelbraune bis schwarze Farbe annimmt.

Um die statische Wärmestabilität zu ermitteln, wird — wie oben beschrieben — zunächst aus den Mischungen ein Walzfell hergestellt und dieses noch 10 Minuten bei 180°C auf dem Walzwerk gewalzt. Aus dem von der Walze gezogenen Fell werden sodann ca. 0,5 mm starke Plättchen mit einem Durchmesser von 30 mm gestanzt. Die Plättchen werden mit einer Aluminiumfolie umwickelt und bei 180°C in einem Wärmeschrank mit Luftumwälzung getempert. Im Abstand von 10 Minuten wird dann jeweils ein Plättchen entnommen und dessen Farbe mit der Farbskala verglichen.

In der verwendeten Farbskala bedeuten die Wertzahlen

1 = wasserhell
2 = geringer Gelbstich
3 = starke Gelbfärbung
4 = tiefe, gelbbraune Farbe
5 = dunkelbraun bis schwarz.

Die Versuchsbedingungen sowie die Ergebnisse sind in den Tabellen 3 und 4 zusammengestellt. Wie ersichtlich, besitzen die neuen Stabilisatoren im Vergleich zu den bekannten Dibutylzinnstabilisatoren (Beispiele 21 bis 24 und 32) bei gleichen Mengen Zinn in der Rezeptur und entsprechenden Resten eine vergleichbare PVC-stabilisierende Wirkung, beeinflussen jedoch die Transparenz der Prüfkörper weniger.

TABELLE 3: Dynamische Wärmestabilität

| Bsp. Nr. | Organozinnstabilisator gemäß Beispiel | Teile | = g Sn | Verfärbung des Walzfelles bei einer Walzzeit von | | | | | | | |
|---|---|---|---|---|---|---|---|---|---|---|---|
| | | | | 5' | 10' | 15' | 20' | 25' | 30' | 35' | 40' |
| | | | | auf Farbzahl | | | | | | | |
| 11 | 1 | 1,15 | 0,130 | 1 [1]) | 1 | 1 | 1–2 | 2 | 3 | 3–4 | 5 |
| 12 | 2 | 1,0 | 0,125 | 1 [1]) | 1 | 1 | 2 | 2–3 | 3 | 3–4 | 5 |
| 13 | 3 | 1,25 | 0,123 | 1 [1]) | 1 | 1–2 | 2 | 2–3 | 3 | 3–4 | 5 |
| 14 | 4 | 1,5 | 0,129 | 1 [1]) | 2 | 2–3 | 2–3 | 3–4 | 3–4 | 5 | – |
| 15 | 5 | 1,1 | 0,125 | 1 [1]) | 1 | 1–2 | 2–3 | 3 | 3 | 3–4 | 5 |
| 16 | 6 | 1,5 | 0,133 | 2 [1]) | 2–3 | 3–4 | 4 | 5 | – | – | – |
| 17 | 7 | 1,2 | 0,132 | 1 [1]) | 2 | 2 | 3 | 3–4 | 5 | – | – |
| 18 | 8 | 1,3 | 0,130 | 1 [1]) | 2 | 2–3 | 3 | 4 | 5 | – | – |
| 19 | 9 | 1,2 | 0,127 | 1 [1]) | 1 | 1 | 2 | 2–3 | 3 | 3–4 | 5 |
| 20 | 10 | 1,45 | 0,131 | 1 [1]) | 1 | 1 | 2–3 | 3 | 3 | 4 | 5 |
| | Vergleiche | | | | | | | | | | |
| 21 | Di-butylzinn-bis-2-äthyl-hexylthioglykolat | 0,70 | 0,130 | 1 [2]) | 1 | 1–2 | 2–3 | 2–3 | 3 | 3–4 | 5 |
| 22 | Di-butylzinn-bis-n-dodecyl-mercaptid | 0,70 | 0,130 | 1 [2]) | 2 | 2 | 2–3 | 3–4 | 3–4 | 5 | – |
| 23 | Di-butylzinn-bis-mono-m-butyl-maleinat | 0,70 | 0,130 | 1 [2]) | 2 | 2–3 | 3 | 3–4 | 5 | – | – |
| 24 | Di-butylzinn-bis-laurat | 0,70 | 0,130 | 2 [2]) | 2–3 | 3–4 | 4 | 5 | – | – | – |
| 25 | nur grundstabilisiert ohne Sn | – | – | 4 | 5 | – | – | – | – | – | – |

[1]) Walzfell völlig klar. [2]) Walzfell leicht opak.

TABELLE 4: Statische Wärmestabilität

| Beispiel Nr. | Organozinnstabilisator gemäß Beispiel | Teile | = g Sn | Verfärbung des Felles im Umlufttrockenschrank bei einer Temperungszeit von | | | | | |
|---|---|---|---|---|---|---|---|---|---|
| | | | | 0' | 20' | 30' | 40' | 50' | 60' |
| | | | | auf Farbzahl | | | | | |
| 26 | 1 | 1,15 | 0,130 | 1 | 2 | 2–3 | 3 | 3–4 | 5 |
| 27 | 2 | 1,0 | 0,125 | 1 | 2 | 2 | 3 | 4 | 5 |
| 28 | 3 | 1,25 | 0.123 | 1 | 2 | 2–3 | 3 | 3–4 | 5 |
| 29 | 5 | 1,1 | 0,125 | 1 | 2 | 3 | 3–4 | 4 | 5 |
| 30 | 9 | 1,2 | 0,127 | 1 | 2 | 2 | 3 | 4 | 5 |
| 31 | 10 | 1,45 | 0,131 | 1 | 2 | 2 | 3 | 3–4 | 5 |
| | Vergleich | | | | | | | | |
| 32 | Dibutylzinn-bis-2-äthylhexylthioglykolat | 0,70 | 0,130 | 1 | 2 | 2 | 3 | 4 | 5 |

**Patentansprüche**

1. Gemisch von Organozinnverbindungen, die durch die Formeln

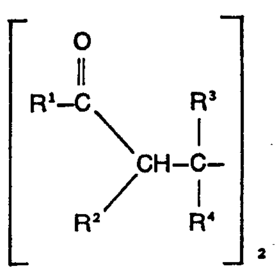 $Sn(R^5)_2$ und 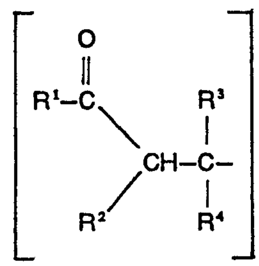 $Sn(R^5)_3$

I II

charakterisiert werden, in denen bedeutet:

$R^1$ OH, $-NH_2$, einen Alkylaminorest, einen Arylaminorest, einen O-Alkylrest oder einen O-Arylrest, wobei die beiden letztgenannten Reste auch aryl- bzw. alkylsubstituiert sein können und sowohl als solche als auch in der aryl- bzw. alkylsubstituierten Form als Substituenten gegebenenfalls noch Halogen oder eine Hydroxyl-, Thioäther-, Äther- und/oder Carboxylgruppe tragen,

$R^2$ bis $R^4$ gleiche oder verschiedene Substituenten und zwar

a) 0 bis 2 Wasserstoffatome sowie

b) Alkylreste mit 1 bis 30 C-Atomen sind, mit der Bedingung, daß mindestens einer dieser Reste eine Gruppe

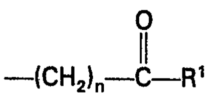

ist, wobei $R^1$ die oben angegebene Bedeutung hat, und n für eine Zahl von 1 bis 15 steht,

$R^5$ $-S-(CH_2)_m-CO_2$-Alkyl, $-S$-Alkyl, $-O_2C$-Alkyl und $-O_2C-CH{=}CH-CO_2$-Alkyl, wobei m die Zahl 1 oder 2 ist und der Alkylrest gegebenenfalls noch $-O-$, $-S-$ oder $-CO_2$-Gruppen und OH-Substituenten enthalten kann,

und die sich in den beiden Gemischkomponenten I und II entsprechenden Reste $R^1$ bis $R^5$ stets gleich sind.

2. Gemisch von Organozinnverbindungen nach Anspruch 1, dadurch gekennzeichnet, daß in den beiden Komponenten der Rest $R^1$ für eine O-Alkylgruppe mit 1 bis 30 C-Atomen, der Rest $R^2$ für

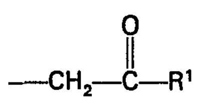

mit der für $R^1$ vorstehend angegebenen Bedeutung, die Reste $R^3$ und $R^4$ für Wasserstoff stehen und der Rest $R^5$ die im Anspruch 1 angegebene Bedeutung hat.

3. Gemisch von Organozinnverbindungen nach den Ansprüchen 1 und 2, dadurch gekennzeichnet, daß das Gewichtsverhältnis der Komponente I zur Komponente II etwa 1 : 0,01 bis 1 : 4 beträgt.

4. Verfahren zur Herstellung der Gemische von Organozinnverbindungen nach den Ansprüchen 1 bis 3 durch Umsetzen von Organozinnhalogeniden mit Mercaptanen, Thiocarbonsäureestern, Carbonsäuren oder Carbonsäurepartialestern in Gegenwart von Halogenwasserstoffakzeptoren und gegebenenfalls von inerten Lösungsmitteln, in an sich bekannter Weise, dadurch gekennzeichnet, daß man Mischungen von Organozinnhalogeniden der allgemeinen Formeln

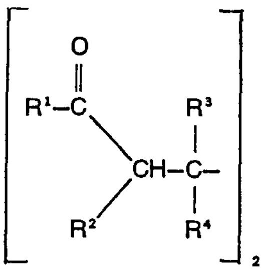 $SnHal_2$ und 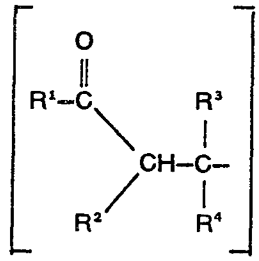 $SnHal_3$

in denen die Reste $R^1$ bis $R^4$ die in Anspruch 1 angegebene Bedeutung haben, und Hal Chlor, Brom oder Jod ist, einsetzt.

5. Verwendung der Organozinnverbindungen nach den Ansprüchen 1 bis 3 als Stabilisatoren für halogenhaltige Polymere in Mengen von 0,1 bis 10 Gewichtsteilen pro 100 Gewichtsteile Polymer.

6. Kunststoff-Formmassen auf Basis chlorhaltiger Polymerer, in denen als Stabilisatoren Organozinnverbindungen nach den Ansprüchen 1 bis 3 enthalten sind.

**Revendications**

1. Mélange de composés organostanniques caractérisé en ce que ceux-ci répondent aux formules:

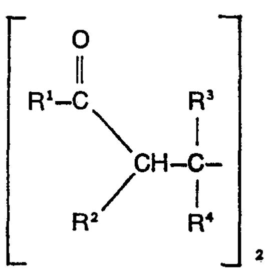 $Sn(R^5)_2$ et 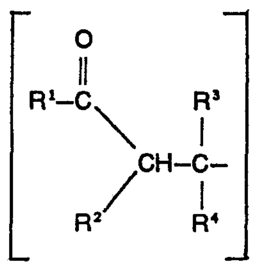 $Sn(R^5)_3$

I II

dans lesquelles:

$R^1$ représente —OH, —$NH_2$, un radical alkylamino, un radical arylamino, un radical alcoxy ou un radical aryloxy, ces deux derniers radicaux pouvant également porter un substituant respectivement arylique ou alkylique et portant éventuellement comme substituants supplémentaires, qu'ils soient ou non porteurs respectivement d'un substituant arylique ou alkylique, un halogène ou un radical hydroxy, thioéther, éther et/ou carboxy,

$R^2$ à $R^4$ représentent des substituants identiques ou différents, plus précisément:

a) de 0 à 2 atomes d'hydrogène ainsi que

b) des radicaux alkyles contenant de 1 à 30 atomes de carbone avec la condition qu'au moins l'un de ces radicaux soit un groupe

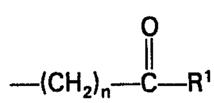

dans lequel $R^1$ a la signification indiquée ci-dessus et n désigne un nombre de 1 à 15,

$R^5$ représente un radical —S—$(CH_2)_m$—$CO_2$-alkyl, —S-alkyl, —$O_2C$-alkyl ou —$O_2C$—CH=CH—$CO_2$-alkyl, l'indice m désignant le nombre 1 ou le nombre 2 et le radical alkyle pouvant en outre contenir des radicaux —O—, —S— ou —$CO_2$— et des substituents —OH, et les radicaux $R^1$ à $R^5$ qui se correspondent dans les deux composants I et II du mélange sont toujours identiques.

2. Mélange de composés organostanniques selon la revendication 1, caractérisé en ce que, dans les deux composantes, $R^1$ représente un radical alcoxy contenant de 1 à 30 atomes de carbone, $R^2$ représente un radical

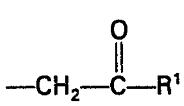

dans lequel $R^1$ a la signification indiquée ci-dessus pour ce symbole, $R^3$ et $R^4$ représentent chacun un atome d'hydrogène et $R^5$ a la signification donnée à la revendication 1.

3. Mélange de composés organostanniques selon l'une des revendications 1 et 2, caractérisé en ce que le rapport pondéral de la composante I à la composante II est compris entre environ 1 : 0,01 et 1 : 4.

4. Procédé de préparation des mélanges de composés organostanniques selon l'une quelconque des revendications 1 à 3, par réaction d'halogénures d'organo-étains avec des mercaptans, des esters d'acides mercapto-alcanoïques, des acides alcanoïques ou des esters partiels d'acides carboxyliques, en présence d'accepteurs d'halogénures d'hydrogène et éventuellement de solvants inertes, effectuée de façon connue, procédé caractérisé en ce qu'on utilise des mélanges d'halogénures d'organo-étains répondant aux formules générales:

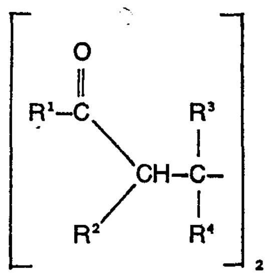 $SnHal_2$ et 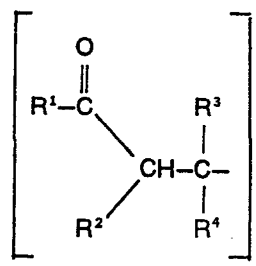 $SnHal_3$

dans lesquelles $R^1$ à $R^4$ ont les significations données à la revendication 1 et Hal représente le chlore, le brome ou l'iode.

5. Application des composés organostanniques selon l'une quelconque des revendications 1 à 3 comme stabilisants pour des polymères contenant des halogènes, en des quantités comprises entre 0,1 et 10 parties en poids pour 100 parties en poids de polymère.

6. Matières à mouler synthétiques à base de polymères contenant du chlore, qui renferment, comme stabilisants, des composés organostanniques selon l'une quelconque des revendications 1 à 3.

**Claims**

1. Mixture of organotin compounds having the formulae

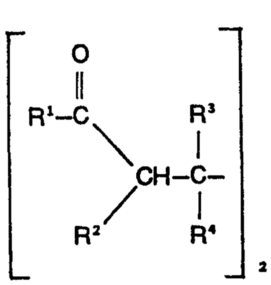 $Sn(R^5)_2$ and 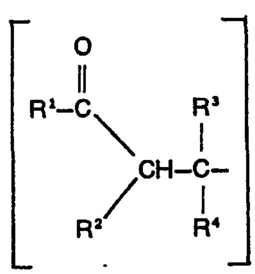 $Sn(R^5)_3$

I II

in which

$R^1$ is OH, $—NH_2$, an alkylamino or arylamino radical, an O-alkyl or O-aryl radical, both the latter radicals being optionally substituted by aryl or alkyl and both the latter substituted or unsubstituted radicals carrying optionally as additional substituents halogen or a hydroxy, thioether, ether and/or carboxyl group;

$R^2$ to $R^4$, being identical or different, each are

a) 0 to 2 hydrogen atoms, or

b) alkyl radicals having from 1 to 30 carbon atoms, with the proviso that at least one of these radicals is a

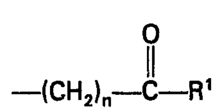

group, where $R^1$ is as defined above and

*n* an integer of from 1 to 15;

$R^5$ is $—S—(CH_2)m—CO_2$-alkyl, —S-alkyl, $—O_2C$-alkyl or $—O_2C—CH{=}CH—CO_2$-alkyl, *m* being 1

or 2 and the alkyl radical optionally containing —O—, —S— or —$CO_2$ groups and OH substituents;

and the radicals $R^1$ to $R^5$ corresponding to one another in the components I and II of the mixture always being identical.

2. Mixture of organotin compounds as claimed in claim 1, wherein in both components the radical $R^1$ is O-alkyl having from 1 to 30 carbon atoms, the radical $R^2$ is

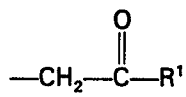

($R^1$ being as defined in this claim), the radicals $R^3$ and $R^4$ each are hydrogen and the radical $R^5$ is as defined in claim 1.

3. Mixture of organotin compounds as claimed in claims 1 and 2, wherein the weight ratio of component I to component II is from about 1:0.01 to 1:4.

4. Process for the manufacture of mixtures of organotin compounds as claimed in claims 1 to 3 by reaction of organotin halides with mercaptans, thiocarboxylic acid esters, carboxylic acids or carboxylic acid partial esters in the presence of hydrogen halide acceptors and optionally inert solvents, according to known methods, which comprises using mixtures of organotin halides of the formulae

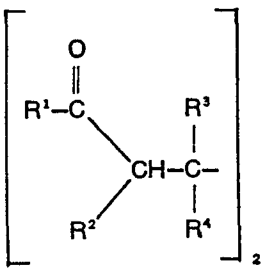

$SnHal_2$ and

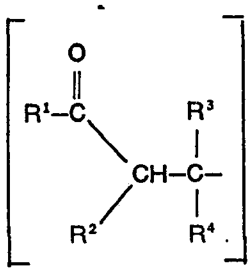

$SnHal_3$

in which the radicals $R^1$ to $R^4$ are defined as in claim 1 and Hal is chlorine, bromine or iodine.

5. Use of the organotin compounds as claimed in claims 1 to 3 as stabilizers for halogen-containing polymers in amounts of from 0.1 to 10 parts by weight per 100 parts by weight of polymer.

6. Plastics molding compositions on the basis of chlorine-containing polymers which contain organotin compounds as claimed in claims 1 to 3 as stabilizers.